# EUROPEAN PATENT SPECIFICATION

(11) **EP 1 609 508 B1**
(45) Date of publication and mention of the grant of the patent: **18.06.2008**
(21) Application number: 03712146.4
(22) Date of filing: 02.04.2003
(51) Int. Cl.: A62C 27/00, B60P 3/00, B62D 33/04

(54) **EMERGENCY TRUCK**
RETTUNGS-LKW
CAMION POUR URGENCES

(43) Date of publication of application: 28.12.2005
(73) Proprietor: Aretxabaleta Ayo, Maria Josefa, 48950 Astrabudua-Erandio Vizcaya (ES); Mendoza Trevilla, Angel, 48950 Astrabudua-Erandio Vizcaya (ES)
(72) Inventor: MENDOZA TREVILLA, Angel, 48950 ASTRABUDUA-ERANDIO (ES)
(74) Representative: Esteban Perez-Serrano, Maria Isabel
(86) International application number: PCT/ES2003/000149
(87) International publication number: WO 2004/087261

(56) References cited:
- DE-A- 19 621 472
- ES-T3- 2 112 059
- FR-A- 2 564 409
- FR-A- 2 564 410
- FR-A- 2 622 809
- GB-A- 2 158 783
- US-A- 3 770 060
- US-A- 5 467 827

## Description

### OBJECT OF THE INVENTION

The present invention relates to an emergency truck, from among vehicles designed and built for use in special emergency situations, the present vehicle being characterised by a design and configuration that make it suitable for use in situations requiring a combination of various resources.

The present invention is characterised by the combination of the resources required to deal with the most varied situations which require the use of different resources such as electricity, water, pressure, illumination.

Thus, the present invention lies in the field of motor vehicles designed to deal with various emergencies.

### BACKGROUND OF THE INVENTION

Hitherto, vehicles intended for providing aid in emergency situations generally are able to deal with only one type of emergency, such as fire, floods or other.

The problem generally facing such vehicles is the material impossibility of dealing with the many different situations occurring in catastrophes, which require the use of different resources. For this reason, trucks with a modular configuration have been developed, as shown in DE 196 21 472 A1 or FR 2 564 410 A1.

Situations arise where it is necessary to have not only water tanks to extinguish fires, but also swivelling lamps and current generators, as on occasions it is necessary to provide electrical power to auxiliary field equipment, such as extraction pumps or oxygen supply or air purification equipment.

Furthermore, in an emergency truck the pump is powered by the truck engine, causing it to overheat. In order to avoid this problem the truck object of the invention is provided with a multiplier connected to the engine that prevents it from overheating.

There is no vehicle currently available in the market that offers such a combination of resources to provide assistance in emergency situations. Moreover, were one to be built including all resources it would be a compact unit, without providing a modular construction, for which GB 2 158 783 A is an example.

In view of this, the object of the invention is to overcome the aforementioned disadvantages by developing a modular system for an emergency vehicle that covers practically any contingency which may occur.

### DESCRIPTION OF THE INVENTION

The object of the present invention of an emergency vehicle is a vehicle provided with a number of mutually connecting modules, disposed on a vehicle or truck so that with all modules assembled and connected to each other and secured on the bed of the truck it is possible to cover practically any contingency, as well as to provide assistance with almost any combination of resources as required.

For this purpose, it is provided with a generator module accessible from the side by vertically movable shutters; on the inside this module comprises an oil deposit, a 20 HP engine, a power transformer unit for supplying power to a battery power supply board and electrovalves for operating hydraulic pressure taps. It is also provided with electrical control and protection boards that control the operation of the shutters of the other modules, the voltage and overall power consumption of the system, the lights and the auxiliary services, providing tri-phasic and mono-phasic current connections for supplying power to any external equipment required.

Immediately beneath this last board is another panel with analogue pressure gauges. Specifically, these show the oil pressure in the 20 HP generator, the oil pressure in the cylinders, the water pressure in the rear pump and the oil pressure in the hydraulic pressure taps. It is also provided with a three-way valve, as well as a pressure regulator for all the pumps of the vehicle, which are a 27 litre, a 22 litre, a 16 litre and a 12 litre pump.

Another module houses the air compressor, as well as leaving free space for housing any required tools or material. This module is only accessible from one of the sides.

Another of the modules of the emergency vehicle object of the invention is one housing two water tanks. Together with the connections for the hoses provided in the adjacent module, these tanks allow emptying a well, garage or warehouse or suctioning with an external pump using the electrical connections for power supply.

The last module connects with the previous one and is provided with a number of taps of various diameters and valves for opening and closing them. It is also provided with a deposit for storing and later distributing mashed food or sera, as well as allowing to supply air / oxygen. Additionally, it is provided with a number of quick-connectors of various diameters for changing the hose diameter.

All of the modules can be secured to and slide on the truck platform by means of rails provided in the truck, and are connected to each other by mechanical and electrical connectors for supplying power to all of them and for supplying the various fluids.

### DESCRIPTION OF THE DRAWINGS

As a complement of the description being made and in order to aid a better understanding of its characteristics, the present descriptive memory is accompanied by a set of drawings with figures where, for purposes of illustration only and in a non-limiting manner the more relevant details of the invention are shown.

Figure 1 shows a general plan view of the truck with the various different modules comprising the vehicle, as well as the main equipment housed in each module.

Figure 2 shows a side perspective view of the emergency vehicle showing the side access to the modules, as well as the illumination provided in them.

Figure 3 shows an enlarged view of the electrical power supply control board.

Figure 4 shows an enlarged view of the module with the pressure regulators and gauges (hydraulic / pneumatic).

Figure 5 shows the control and protection board for the spotlights and the pump.

Figure 6 shows a side view of the module providing access to the hose connections.

Figure 7 shows the rear part of the module providing access to the hose connections.

Figure 8 shows a side view of the current generation module, showing an oil tank, a 12V power supply board and the hydraulic pressure taps.

Figure 9 shows the compressor.

Figure 10 shows the 20 HP generator as well as a fan.

### PREFERRED EMBODIMENT OF THE INVENTION

In view of the above described figures, a preferred embodiment of the invention is described hereunder with an explanation of the drawings.

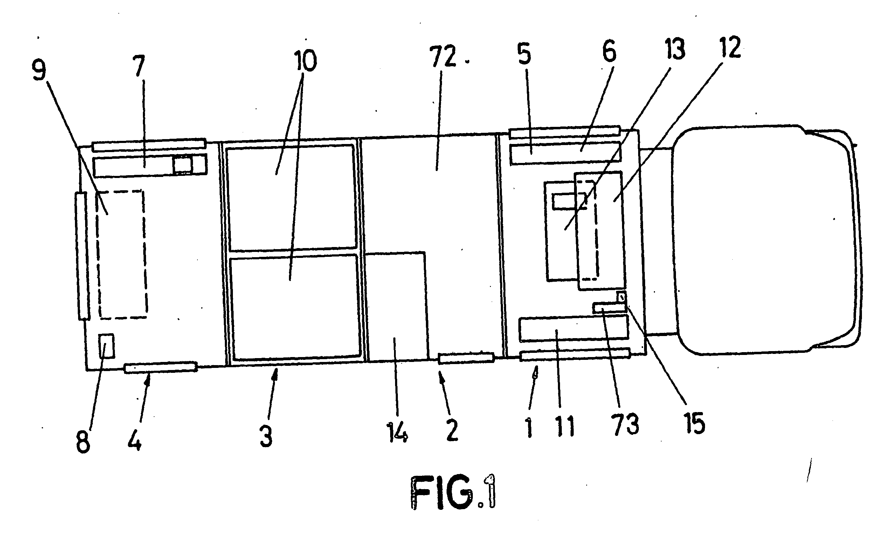

Figure 1 shows how the emergency truck comprises a number of interconnected modules secured on the bed of the truck. Specifically, there are four modules where module (1) is the generator module that houses a 20 HP generator and the boards for controlling the electrical power supply and for controlling and regulating the pressure; also provided in this module are an oil deposit (12), a board (73) housing a transformer supplying power to a board (15) for the 12V power supply for battery recharging, as well as the power supply to the electrovalves controlling the hydraulic pressure taps, and a panel (11) housing the buttons and gauges of the pressure taps. Also housed on the other side are the boards (5) and (6), which respectively are the electrical power supply control board and the control board for regulating and showing the pump pressure.

After said first generator module (1) is disposed the module (2), which houses a compressor (14), followed by the module (3), which houses two tanks (10) holding 1,000 litres each, and finally the module (4), which includes all access connections for the hoses (9) as well as the control and protection board for spotlights (7) and a pump board (8).

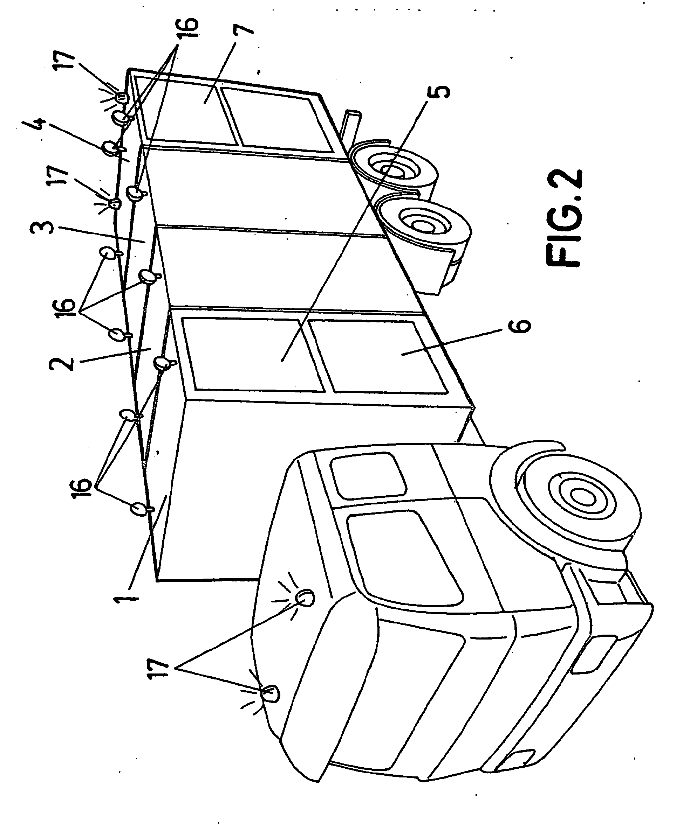

Figure 2 shows that the vehicle or truck is provided with a number of lamps distributed along the top part of the cab and on the modules themselves; specifically, there is a pair of emergency lamps (17) on the front of the cab, and on the sides of the modules there are other swivelling lamps (16) for general illumination. On the top of the rear of the truck there is another emergency lamp (17) and another illumination lamp (16). The illumination lamps (16) are characterised by being motorised, so that their position can be determined with a selector.

Also shown are the general control and protection board (5) of the assembly and the board (6) for showing and controlling the regulation of the pump pressure. Visible in the rear module is the front panel of the control and protection board for power supply to the spotlights (7).

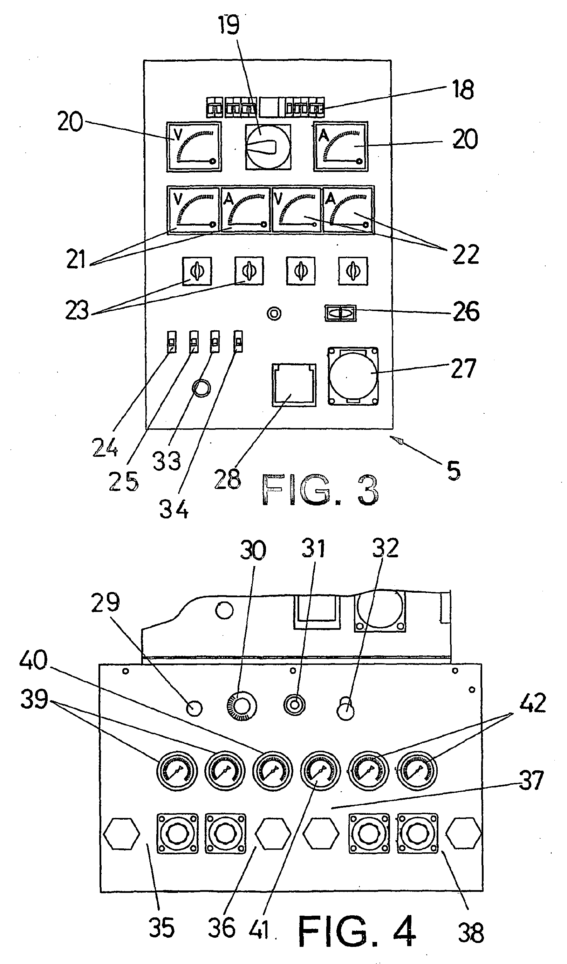

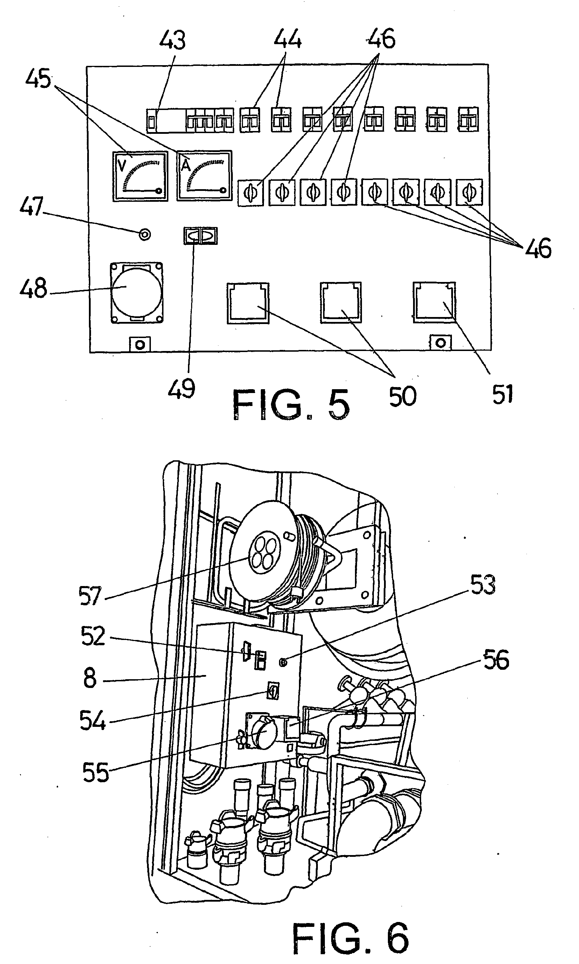

Figure 3 shows the elements comprising the control and protection board (5) for the general power supply of the assembly, provided with a pair of switches (18), one voltmeter and ammeter set (20) to show the power supply voltage and the overall current consumption of the assembly, and other voltmeter and ammeter sets (21) and (22) for the power supply voltage and consumption of the illumination lamps and the auxiliary services respectively. The auxiliary services consist of the battery charger and the power supply for the electrovalves of the hydraulic pressure taps. Said board (5) is also provided with switches (23) for raising and lowering the module shutters. In addition, it is provided with a dual on/off switch (26) for the general pump. Included in said board are four switches (24, 25, 33 and 34). The switch (34) is for control and protection of the external lamps; the switch (25) is for control and protection of a fan placed next to a transformer for power supply to the external spotlights, placed behind the panel (7) (figure 5). The switches (33) and (34) are for supplying power to the board (15), which houses the board (13) for recharging the batteries and the electrovalves of the pressure taps. Finally, it is provided with a tri-phasic power connection and a mono-phasic power connection.

Figure 4 shows the panel (6) placed beneath the board (5) (figure 3), where it can be seen to comprise an idling potentiometer (29), a thermostat (30), a pneumatic regulator (31) and a seal (32) for opening the general oil valve.

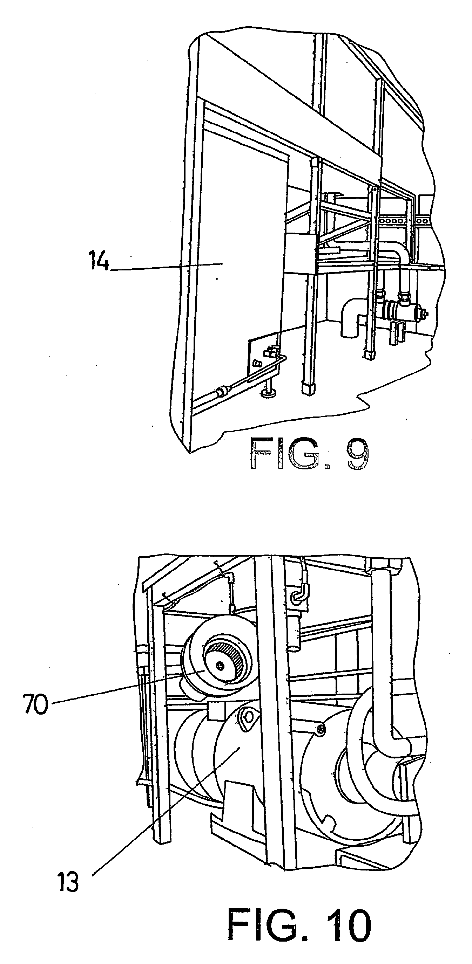

The thermostat (30) is regulated so that if the temperature of 30°C is exceeded in the transformer powering the control panel (7) of the external spotlights (16), the fan (70) (figure 10) of the 20 hp generator is turned on.

Beneath these controls are placed the pressure gauges (39, 40, 41 and 42), of which indicators (39) show the oil pressure in the 20 HP generator (13), indicators (40) show the air pressure for opening the valve that controls the inlet of oil in the pumps, the gauge (41) shows the water pressure in the rear pump and the gauges (42) show the oil pressure in the 16 litre and 12 litre hydraulic taps.

Finally, a number of couples are provided comprised of a three-way valve and pressure regulators (35, 36, 37, 38) for the 27 litre, 24 litre, 16 litre and 12 litre pumps respectively. When the three-way valves are actuated they send the oil to the generator instead of to the oil tank (13).

Figure 5 shows the component elements of the control panel for the spotlights (7) located on the rear module (4). This panel (7) is provided with a number of switches (43) for control and protection of the pump, a number of magnetothermal switches (44) for control and protection of each spotlight (16) (figure 2), and a voltmeter and ammeter set (45) for showing the power supply and consumption of the pump of the truck in the rear module, next to which are installed the spotlight orientation switches (46), as these are motorised to allow their orientation; in addition, it is also provided with an on / off switch (49) for the pump provided in the module (4). Finally, it is provided with a tri-phasic current connection (48), two mono-phasic current connections at 220 V (50) and one mono-phasic current connection at 125 V (51).

Figure 6 also shows a side view of the last module (4), revealing the control board (8) of a pump with an on / off dual switch (52), an operation indicator lamp (53), a tri-phasic current connection (55) and one mono-phasic current connection at 220 V (56). Immediately above this is provided a connection hose (57).

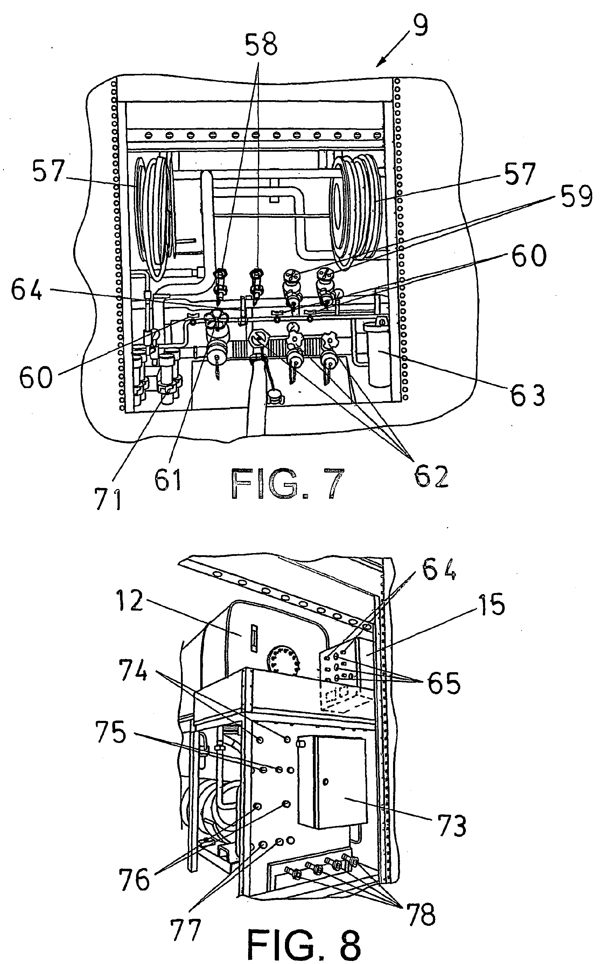

Figure 7 shows the assembly of connections for the hoses (9), as well as two hose reels (57) on either side of the module (4); beneath this are two one-inch taps (58) and two 1 ½ inch taps (59), under which there are valves (60) for opening and closing the outlet of air/water. On the other side it has a 2 ½ inch tap (61), three 1 ½ inch taps (62) and a container for mashed food (63). On the base of the module are set a number of fast connectors (71) for changing the hose diameter.

Figure 8 shows the other side of the module (1), revealing the oil tank (12) on the top of the assembly, adjacent to which is an electrical power supply board (15) for charging batteries, provided with a number of 12 V connections (64) and other also 12 V connections requiring the connectors (65). Beneath said board (15) is a board (73) housing a power supply transformer for the battery-recharging board (13), which provides power to electrovalves for operating the pressure taps (78).

The board (73) is placed on a panel (11) including the gauges and controls of the taps (78). Specifically, there are two power switches (74), one for each pair of hydraulic pressure taps (78); beneath this are four indicators (75) showing the operation of the pressure taps, of which the first and second show the automatic or manual operation of the first pair of pressure taps respectively, while the third and fourth show the automatic or manual operation of the second pair of pressure taps. On the bottom row is a pair of buttons (76) for choosing manual or automatic operation, and finally the last row comprises four buttons (77), of which the first two select the impulsion/return of the first pair of pressure taps while the other two are for controlling the impulsion/return of the second pair of taps; all of this can be performed using a remote control device.

Figure 9 shows the module (2) housing the compressor (14), with a free space (72) provided in said module.

Figure 10 shows the 20 HP generator (13) above which is the fan (70) for forced ventilation when required.

It is not considered necessary to extend this description for an expert in the field to understand its scope and the advantages derived thereof.

The materials, shape, size and arrangement of the component elements may vary as long as the essence of the invention, as defined by the claims, is not changed.

The terms used in this descriptive memory shall be understood in a wide and non-limiting sense.

## Claims

1. Emergency truck, which comprises a number of modules that can be connected to each other and are secured on the bed of the truck, allowing the use of combined resources regardless of the emergency situation which may arise, **characterized in that** is provided with a generator module (1), a module (2) housing a compressor (14), another module (3) housing two water tanks (10) and finally a module (4) with the hose-connection taps (9) and a control panel for illumination with spotlights; wherein the generator module (1) is provided with a board (5) for control and protection of the entire power generation of the unit, another board (6) for controlling the regulation and indication of the pump pressure, and on the other side it is provided with a board (15) for a 12 V power supply and a control panel (11) for the pressure taps (78), both of these being powered from a board (73) housing a transformer; internally provided is an oil deposit (12) beneath which are housed a 20 HP generator (13) and a fan (70); it is also provided with an emergency lamp and external illumination system; the access to the inside of the modules is achieved by means of shutters; in addition, it is provided with a multiplier connected between the engine and the pump, intended to prevent the truck engine from overheating.

2. Emergency truck according to claim 1, **characterised in that** the illumination system comprises two emergency lamps (17) placed on the top of the front of the cab and an emergency light (17) on the rear of the last module, while the illumination system comprises a set of motorised swivelling lamps (16) controlled from a distance and disposed on the top of the truck.

3. Emergency truck according to claim 1, **characterised in that** the control and protection board (5) for the overall power supply for the system comprises a set of switches (18), a voltmeter and ammeter set (20) for showing the power supply voltage and the overall current consumption of the assembly, and other voltmeter and ammeter sets (21) and (22) for showing the power supply voltage and consumption of the illumination lamps and the auxiliary services respectively, wherein the auxiliary services are the power supply to the 12V power supply board (15), as well as the power supply to the electrovalves of the pressure tap (78); it is also provided with switches (23) for raising and lowering the module shutters; in addition, it has a dual on / off switch (26) for a pump; also provided in said board are four switches (24, 25, 33 and 34): the switch (34) is for control and protection of the external lamps; the switch (25) is for control and protection of a fan located next to a transformer for power supply to the external spotlights, placed behind the panel (7) and the switches (33) and (34) are for power supply to the board (15).

4. Emergency truck according to claim 1, **characterised in that** the panel (6) is provided with an idling potentiometer (29), a thermostat (30), a pneumatic regulator (31), a seal (32) for opening the valve of the general oil; beneath these controls are disposed pressure gauges (39), 40, 41 and 42), where the gauges (39) show the oil pressure in the 20 HP generator (13), the gauges (40) show the air pressure for opening the valve that controls the inlet of oil in the pumps, the gauge (41) shows the water pressure in the rear pump and the gauges (42) show the oil pressure in the 16 litre and 12 litre hydraulic connections; finally, a number of couples are provided comprised of a three-way valve and pressure regulators (35, 36, 37, 38) for the 27 litre, 24 litre, 16 litre and 12 litre pumps respectively; when these three-way valves are actuated they send the oil to the generator instead of to the oil tank (13).

5. Emergency truck according to claim 1, **characterised in that** the control panel (7) for the spotlights is provided with a set of switches (43) for control and protection of the pump, a set of magnetothermal switches (44) for control and protection of each spotlight (16), as well as a voltmeter and ammeter set (45) for showing the power supply and consumption of the pump of the truck in the rear module, next to which are installed the spotlight orientation switches (46), as these are motorised to allow their orientation; in addition, it is also provided with an on / off switch (49) for the pump; it is also provided with an on / off switch (49) for the pump and an indicator (47) of the operation status of the pump in module (4).

6. Emergency truck according to claim 1, **characterised in that** above the module (4) is a control board (8) for a pump, said board having a dual on/off switch (52), an operation status indicator lamp (53), a tri-phasic current connection (55) and a 220V mono-phasic current connection (56).

7. Emergency truck according to claim 1, **characterised in that** the set of connections for the hoses (9) has two reels for the hoses (57) placed on either side of said module (4), beneath these are two one-inch taps (58) and two 1½ inch taps (59), beneath which are valves (60) for opening and closing the outlet of air/water; in addition it has a 2 ½ inch tap (61) and three 1½ inch taps (62) as well as a container for mashed food (63); on the base of the module are a number of fast connectors (71) for changing the hose diameter.

8. Emergency truck according to claim 1, **characterised in that** the module (1) is provided with a 12V electrical power supply board (15) for charging the batteries, with a number of 12 V connections (64) and other 12 V connections where connection is established with connectors (65), also at 12V; beneath said board (15) is a board (73) housing a power supply transformer for the battery-recharging board (15), which supplies power to the electrovalves for operating the pressure taps (78).

9. Emergency truck according to claim 8, **characterised in that** the operation of the pressure taps is controlled by a panel (11) housing the gauges and controls of said taps (78) having two power switches (74), one for each pair of pressure taps (78); beneath these are disposed four indicators (75) showing the operation status of the pressure taps, where the first and second show the automatic / manual operation of the first pair of pressure taps respectively, and the third and fourth show the automatic / manual operation of the second pair of pressure taps respectively; on the bottom row is a pair of buttons (76) for choosing between automatic or manual operation, and finally the last row comprises four buttons (77), of which the first two select the impulsion/return of the first pair of pressure taps while the other two are for controlling the impulsion/return of the second pair of taps; all of this can be controlled with a remote control device.

10. Emergency truck according to claim 4, **characterised in that** the thermostat (30) is regulated so that if a temperature of 70 degrees is exceeded in the transformer for power supply to the control panel (7) of the external spotlights (16), the fan (70) of the 20 HP generator (13) is turned on.

## Patentansprüche

1. Notfallwagen, der eine Anzahl Module umfasst, die miteinander verbunden werden können und auf dem Boden des Wagens gesichert sind, wobei die Verwendung kombinierter Hilfsmittel unabhängig von der Notfallsituation ermöglicht wird, die auftreten könnte, **dadurch gekennzeichnet, dass** dieser mit einem Generatormodul (1), einem Modul (2) zur Aufnahme eines Kompressors (14), einem anderen Modul (3) zur Aufnahme zweier Wassertanks (10) und schließlich einem Modul (4) mit den Schlauchverbindungs-Anschlüssen (9) und einem Steuerpaneel für die Beleuchtung mit Scheinwerfern ausgestattet ist; worin das Generatormodul (1) mit einer Tafel (5) zur Steuerung und Sicherung der gesamten Stromerzeugung der Einheit ausgestattet ist, einer anderen Tafel (6) zur Steuerung der Erzeugung und Anzeige des Pumpendrucks, und auf der anderen Seite mit einer Tafel (15) für eine 12-V-Stromversorgung und einem Steuerpaneel (11) für die Druckanschlüsse (78) ausgestattet ist, wobei diese beide von einer Tafel (73) aus mit Strom versorgt werden, in der ein Transformator aufgenommen ist; intern ist ein Öltank (12) vorgesehen, unter dem ein 20-PS-Generator (13) und ein Ventilator (70) aufgenommen sind; weiterhin ist der Wagen mit einem Notfallscheinwerfer und einem externen Notbeleuchtungssystem ausgestattet; der Zugang zum Inneren der Module wird mittels Klappen erreicht; zusätzlich dazu verfügt der Wagen über einen zwischen dem Motor und der Pumpe angeschlossenen Vervielfacher, der dazu bestimmt ist, den Motor des Wagens vor einer Überhitzung zu schützen.

2. Notfallwagen nach Anspruch 1, **dadurch gekennzeichnet, dass** das Beleuchtungssystem zwei Notfallscheinwerfer (17) umfasst, die oben auf der Vorderseite der Fahrerkabine platziert sind, sowie eine Notleuchte (17) hinter dem letzten Modul, während das Beleuchtungssystem einen Satz motorisierter Suchscheinwerfer (16) umfasst, die aus einer Entfernung gesteuert werden und oben auf dem Wagen angeordnet sind.

3. Notfallwagen nach Anspruch 1, **dadurch gekennzeichnet, dass** die Steuerungs- und Sicherungstafel (5) für die gesamte Stromversorgung des Systems einen Satz Schalter (18), einen Voltmeter- und Amperemetersatz (20) zur Anzeige der Spannung der Stromversorgung und des gesamten Stromverbrauchs der Baugruppe, sowie andere Voltmeter- und Amperemetersätze (21) und (22) zur Anzeige der Spannung der Stromversorgung und des Stromverbrauchs der Beleuchtungsscheinwerfer beziehungsweise der Zusatzleistungen umfasst, wobei es sich bei den Zusatzleistungen um die Stromversorgung der 12-V-Stromversorgungstafel (15) sowie die Stromversorgung der Elektroventile der Druckanschlüsse (78) handelt; er ist weiterhin mit Schaltern (23) zur Anhebung und Absenkung der Klappen der Module ausgestattet; zusätzlich dazu verfügt er über einen dualen Ein-/Aus-Schalter (26) für eine Pumpe; ebenfalls in der besagten Tafel vorhanden befinden sich 4 Schalter (24, 25, 33 und 34): der Schalter (34) ist für die Steuerung und Sicherung der Außenscheinwerfer; der Schalter (25) ist für die Steuerung und Sicherung eines Ventilators, der sich neben einem Transformator für die Stromversorgung der äußeren Scheinwerfer hinter dem Paneel (7) befindet, und die Schalter (33) und (34) sind für die Stromversorgung der Tafel (15).

4. Notfallwagen nach Anspruch 1, **dadurch gekennzeichnet, dass** die Tafel (6) mit einem Leerlaufpotenziometer (29), einem Thermostat (30), einem pneumatischen Regler (31), einer Dichtung (32) zur Öffnung des Ventils des allgemeinen Öls ausgestattet ist; unter diesen Steuerungen sind Druckmesser (39, 40, 41 und 42) angeordnet, wobei die Druckmesser (39) den Öldruck des 20-PS-Generators (13) anzeigen, die Druckmesser (40) den Luftdruck zur Öffnung des Ventils anzeigen, das den Oleinlass in die Pumpen steuert, die Druckmesser (41) den Wasserdruck der hinteren Pumpe anzeigen und die Druckmesser (42) den Öldruck der hydraulischen 16 Liter und 12 Liter Verbindungen anzeigen; schließlich werden eine Anzahl von Koppeln zur Verfügung gestellt, die aus einem Dreiwegeventil und Druckreglern (35, 36, 37, 38) für 27-Liter-, 24-Liter-, 16-Liter- beziehungsweise 12-Liter-Pumpen bestehen; wenn diese Dreiwegeventile betätigt werden, senden sie Öl an den Generator anstelle an den Öltank (13).

5. Notfallwagen nach Anspruch 1, **dadurch gekennzeichnet, dass** die Steuertafel (7) für die Scheinwerfer mit einem Satz Schalter (43) für die Steuerung und Sicherung der Pumpe, einem Satz magnetothermischer Schalter (44) für die Steuerung und Sicherung jedes Scheinwerfers (16), sowie einem Voltmeter- und Amperemetersatz (45) für die Anzeige der Stromversorgung und des Verbrauchs der Pumpen des Wagens in dem hinteren Modul ausgestattet ist, neben denen die Schalter (46) zur Ausrichtung der Scheinwerfer installiert sind, da diese motorisiert sind, um deren Ausrichtung zu erlauben; zusätzlich dazu ist er ebenfalls mit einem Ein-/Aus-Schalter (49) für die Pumpe ausgestattet; er ist ebenfalls mit einem Ein-/Aus-Schalter (49) für die Pumpe und einem Anzeiger (47) des Betriebszustands der Pumpe in dem Modul (4) ausgestattet.

6. Notfallwagen nach Anspruch 1, **dadurch gekennzeichnet, dass** sich über dem Modul (4) eine Steuertafel (8) für die Pumpe befindet, wobei die besagte Tafel einen dualen Ein-/Aus-Schalter (52), eine Lampe zur Anzeige des Betriebszustands (53), eine dreiphasige Stromverbindung (55) und eine einphasige 220-V-Stromverbindung (56) besitzt.

7. Notfallwagen nach Anspruch 1, **dadurch gekennzeichnet, dass** der Satz Schlauchverbindungen (9) zwei Aufroller für die Schläuche (57) besitzt, die auf jeder Seite des besagten Moduls (4) platziert sind, unter diesen befinden sich zwei Ein-Zoll Anschlüsse (58) und zwei 1½-Zoll Anschlüsse (59), unter denen sich Ventile (60) für die Öffnung und Schließung des Luft-/Wasserauslasses befinden; zusätzlich dazu verfügt dieser über einen 2½-Zoll Anschluss (61) und drei 1½-Zoll-Anschlüsse (62) sowie außerdem über einen Behälter (63) für pürierte Lebensmittel (63), auf dem Boden des Moduls befindet sich eine Anzahl von Schnellverbindern (71) für die Änderung des Schlauchdurchmessers.

8. Notfallwagen nach Anspruch 1, **dadurch gekennzeichnet, dass** das Modul (1) mit einer elektrischen 12-V-Stromversorgungs-Tafel (15) für das Aufladen der Batterien ausgestattet ist, mit einer Anzahl von 12-V-Verbindungen (64) und anderen 12-V-Verbindungen, bei denen die Verbindung mit Verbindern (65) durchgeführt ist, ebenfalls mit 12 V; unter der besagte Tafel (15) befindet sich eine Tafel (73), in der der Stromversorgungs-Transformator für die Tafel zur Aufladung der Batterien (15) untergebracht ist, der Strom an die Elektroventile für den Betrieb der Druckanschlüsse (78) liefert.

9. Notfallwagen nach Anspruch 8, **dadurch gekennzeichnet, dass** der Betrieb der Druckanschlüsse über ein Paneel (11) gesteuert wird, in dem Druckmesser und Steuerungen der besagten Anschlüsse (78) untergebracht sind, wobei dieses über zwei Stromschalter (74) verfügt, einen für jedes Paar Druckanschlüsse (78); unter diesen sind vier Anzeiger (75) angeordnet, die den Betriebszustand der Druckanschlüsse anzeigen, wobei der erste und zweite jeweils den automatischen/manuellen Betrieb des ersten Paares von Druckanschlüssen anzeigt und der dritte und vierte jeweils den automatischen/manuellen Betrieb des zweiten Paares von Druckanschlüssen anzeigt; auf der unteren Reihe befindet sich ein Paar Knöpfe (76) für die Auswahl zwischen automatischem oder manuellem Betrieb, und die letzte Reihe schließt letztendlich vier Knöpfe (77) ein, von denen die beiden ersten den Anstoß/die Rückkehr des ersten Paares von Druckanschlüssen auswählen, während die anderen beiden für die Steuerung des Anstoßes/der Rückkehr des zweiten Paares von Anschlüssen bestimmt sind; all dies kann mit einer Fernbedienung gesteuert werden.

10. Notfallwagen nach Anspruch 4, **dadurch gekennzeichnet, dass** das Thermostat (30) reguliert ist, so dass, falls in dem Transformator für die Stromversorgung der Steuertafel (7) der äußeren Scheinwerfer (16) eine Temperatur von 70 Grad überschritten wird, der Ventilator (70) des 20-PS-Generators (13) eingeschaltet wird.

## Revendications

1. Camion d'intervention urgente, qui comprend plusieurs modules qui peuvent être connectés les uns aux autres et qui sont fixés sur le châssis du camion, ce qui permet l'utilisation de ressources combinées quelle que soit la situation d'urgence qui puisse se présenter, **caractérisé en ce qu'**il est équipé d'un module de générateur (1), d'un module (2) hébergeant un compresseur (14), d'un autre module (3) hébergeant deux citernes pour le stockage de l'eau (10) et enfin un module (4) avec les robinets de raccordement aux tuyaux (9) et un panneau de contrôle pour l'éclairage avec des projecteurs; dans lequel le module de générateur (1) est équipé d'un tableau (5) pour la commande et la protection de toute la génération d'électricité de l'unité, d'un autre tableau (6) pour contrôler le réglage et l'indication de la pression de la pompe, et de l'autre côté il est équipé d'un tableau (15) pour une alimentation électrique de 12 V et d'un panneau de contrôle (11) pour les prises de pression (78), les deux étant alimentés à partir d'un tableau (73) hébergeant un transformateur; à l'intérieur, il est équipé d'un réservoir d'huile (12) sous lequel sont hébergés un générateur de 20 CV (13) et un ventilateur (70); il est également équipé d'une lampe de secours et d'un système d'éclairage externe; des persiennes permettent l'accès à l'intérieur des modules; de plus, il est équipé d'un multiplicateur connecté entre le moteur et la pompe, destiné à empêcher l'échauffement du moteur du camion.

2. Camion d'intervention urgente selon la revendication 1, **caractérisé en ce que** le système d'éclairage comprend deux lampes de secours (17) placées au-dessus de la partie avant de la cabine et une lampe de secours (17) à l'arrière du dernier module, tandis que le système d'illumination comprend un ensemble de lampes pivotantes motorisées (16) commandées à distance et disposées au-dessus du camion.

3. Camion d'intervention urgente selon la revendication 1, **caractérisé en ce que** le tableau de commande et de protection (5) pour l'alimentation électrique générale du système comprend un jeu d'interrupteurs (18), un jeu de voltmètre et d'ampèremètre (20) pour indiquer la tension de l'alimentation électrique et la consommation de courant générale de l'ensemble, ainsi que d'autres jeux de voltmètre et d'ampèremètre (21) et (22) pour indiquer la tension de l'alimentation électrique et la consommation des lampes d'éclairage et des services auxiliaires respectivement, les services auxiliaires étant l'alimentation électrique pour le tableau d'alimentation électrique de 12 V (15), ainsi que l'alimentation électrique pour les électrovannes des prises de pression (78); il comprend également des interrupteurs (23) pour relever ou abaisser les persiennes des modules; en outre, il possède un double interrupteur de marche/arrêt (26) pour une pompe; sont également présents sur ledit tableau quatre interrupteurs (24, 25, 33 et 34): l'interrupteur (34) est prévu pour la commande et la protection des lampes extérieures; l'interrupteur (25) est prévu pour la commande et la protection d'un ventilateur situé près d'un transformateur pour l'alimentation électrique des projecteurs extérieurs, qui est placé derrière le panneau (7) et les interrupteurs (33) et (34) sont prévus pour l'alimentation électrique du tableau (15).

4. Camion d'intervention urgente selon la revendication 1, **caractérisé en ce que** le panneau (6) est équipé d'un potentiomètre de ralenti (29), d'un thermostat (30), d'un régulateur pneumatique (31), d'une fermeture (32) pour l'ouverture de la vanne de l'huile générale; en dessous de ces commandes des jauges de pression (39), 40, 41 et 42) sont disposées, où les jauges (39) indiquent la pression de l'huile dans le générateur 20 CV (13), les jauges (40) indiquent la pression de l'air pour l'ouverture de la vanne qui commande l'entrée de l'huile dans les pompes, la jauge (41) indique la pression de l'eau dans la pompe arrière et les jauges (42) indiquent la pression de l'huile dans les raccords hydrauliques de 16 litres et de 12 litres; enfin, plusieurs couples sont disposés qui sont constitués d'une vanne à trois voies et de régulateurs de pression (35, 36, 37, 38) pour les pompes de 27 litres, 24 litres, 16 litres et 12 litres respectivement; lorsque ces vannes à trois voies sont actionnées elles envoient l'huile au générateur au lieu de l'envoyer au réservoir d'huile (13).

5. Camion d'intervention urgente selon la revendication 1, **caractérisé en ce que** le panneau de commande (7) pour les projecteurs est équipé d'un jeu d'interrupteurs (43) pour la commande et la protection de la pompe, d'un jeu d'interrupteurs magnétothermiques (44) pour la commande et la protection de chaque projecteur (16), ainsi que d'un jeu de voltmètre et d'ampèremètre (45) pour indiquer l'alimentation électrique et la consommation de la pompe du camion dans le module arrière, près desquels sont installés les commutateurs d'orientation (46) des projecteurs, étant donné que ceux-ci ont motorisés pour permettre leur orientation; par ailleurs il comporte également un interrupteur de marche/arrêt (49) pour la pompe et un indicateur (47) du statut de fonctionnement de la pompe dans le module (4).

6. Camion d'intervention urgente selon la revendication 1, **caractérisé en ce que** au-dessus du module (4) se trouve un tableau de commande (8) pour une pompe, ledit tableau possédant un double interrupteur de marche/arrêt (52), une lampe indicatrice du statut de fonctionnement (53), une prise de courant triphasé (55) et une prise de courant monophasé 220 V (56).

7. Camion d'intervention urgente selon la revendication 1, **caractérisé en ce que** le jeu de raccordements pour les tuyaux (9) possède deux enrouleurs pour les tuyaux (57) placés de chaque côté dudit module (4), en dessous de ceux-ci il y a deux robinets d'un pouce (2,54 cm) (58) et deux robinets de 1,5 pouce (3,81 cm) (59), sous lesquels se trouvent des vannes (60) pour ouvrir et fermer la sortie d'air/eau; de plus, il possède un robinet de 2,5 pouces (6,35 cm) (61) et trois robinets de 1,5 pouce (3,81 cm) (62) ainsi qu'un conteneur pour aliments broyés (63); sur la base du module il y a plusieurs connecteurs rapides (71) pour changer le diamètre du tuyau.

8. Camion d'intervention urgente selon la revendication 1, **caractérisé en ce que** le module (1) est équipé d'un tableau d'alimentation en énergie électrique de 12 V (15) pour le chargement des batteries, avec plusieurs prises de 12 V (64) et d'autres prises de 12 V où la connexion est établie avec des connecteurs (65), à 12 V également; en dessous dudit tableau (15) il y a un tableau (73) hébergeant un transformateur d'alimentation électrique pour le tableau de rechargement des batteries (15), qui fournit de l'électricité aux électrovannes pour le fonctionnement des robinets de pression (78).

9. Camion d'intervention urgente selon la revendication 8, **caractérisé en ce que** le fonctionnement des robinets de pression est contrôlé par un panneau (11) hébergeant les jauges et les commandes desdits robinets (78) possédant deux interrupteurs d'alimentation (74), un pour chaque paire de robinets de pression (78); en dessous de ceux-ci sont disposés quatre indicateurs (75) du statut de fonctionnement des robinets de pression, où le premier et le second indiquent le fonctionnement automatique/ manuel de la première paire de robinets de pression respectivement, et le troisième et le quatrième indiquent le fonctionnement automatique/ manuel de la seconde paire de robinets de pression respectivement; sur la rangée inférieure se trouve une paire de boutons (76) pour choisir entre le fonctionnement automatique ou manuel, et enfin la dernière rangée comprend quatre boutons (77), dont les deux premiers sélectionnent l'impulsion/ le retour de la première paire de robinets de pression tandis que les deux autres sont prévus pour commander l'impulsion/ le retour de la seconde paire de robinets; tout cela pouvant être commandé à l'aide d'un dispositif de commande à distance.

10. Camion d'intervention urgente selon la revendication 4, **caractérisé en ce que** le thermostat (30) est réglé de sorte que, si une température de 70 degrés est dépassée dans le transformateur pour l'alimentation électrique du panneau de commande (7) des projecteurs extérieurs (16), le ventilateur (70) du générateur de 20 CV (13) se met à fonctionner.
